# EUROPÄISCHE PATENTSCHRIFT

(11) **EP 3 129 311 B1**
(45) Veröffentlichungstag und Bekanntmachung des Hinweises auf die Patenterteilung: **24.05.2023**
(21) Anmeldenummer: 15711450.5
(22) Anmeldetag: 12.03.2015
(51) Int. Cl.: B65G 57/24

(54) **VERFAHREN ZUR HORIZONTALEN VERSCHIEBUNG VON ARTIKELGRUPPEN**
METHOD FOR DISPLACING GROUPS OF ARTICLES HORIZONTALLY
PROCÉDÉ PERMETTANT DE DÉPLACER HORIZONTALEMENT DES GROUPES D'ARTICLES

(30) Priorität: 11.04.2014 DE 102014206988
(43) Veröffentlichungstag der Anmeldung: 15.02.2017
(73) Patentinhaber: Krones AG, 93073 Neutraubling (DE)
(72) Erfinder: BEER, Erhard, 93073 Neutraubling (DE); FRITSCH, Dennis, 93073 Neutraubling (DE); GRAF, Peter, 93073 Neutraubling (DE); KOLLMUSS, Manuel, 93073 Neutraubling (DE); OSTERHAMMER, Martin, 93073 Neutraubling (DE)
(74) Vertreter: Benninger, Johannes
(86) Internationale Anmeldenummer: PCT/EP2015/055225
(87) Internationale Veröffentlichungsnummer: WO 2015/154945

(56) Entgegenhaltungen:
- EP-A1- 0 489 681
- EP-A1- 1 860 042
- JP-U- S5 279 686
- US-A1- 2004 154 902
- US-A1- 2009 279 999
- US-A1- 2012 297 733

## Beschreibung

Die vorliegende Erfindung betrifft ein Verfahren zur horizontalen Verschiebung einer Artikelgruppe oder Artikellage mit den Merkmalen des unabhängigen Anspruchs 1.

Werden Gruppen von Artikeln mittels Schubbalken oder anderer geeigneter Überschubmittel oder auch mit beweglichen Auflageebenen in horizontaler Richtung in eine definierte Position verschoben, so besteht je nach Geschwindigkeit der Verschiebebewegung beim Erreichen der Endposition ein gewisses Risiko, dass sich die Artikel innerhalb der Gruppe relativ zueinander bewegen. Unter ungünstigen Umständen, insbesondere bei einer starken Verzögerung am Ende der Überschubbewegung, können sogar einzelne Artikel umfallen. In aller Regel besteht für die in Überschubrichtung zuvorderst stehenden Artikel das größte Risiko für ein Umfallen oder Verrutschen, so dass das zuvor bestehende Lagenbild nicht in der gewünschten Weise aufrechterhalten werden kann. Aus diesem Grund sind die realisierbaren Überschubgeschwindigkeiten begrenzt. Insbesondere vor dem Erreichen der gewünschten Endposition ist die Geschwindigkeit ggf. moderat zu reduzieren, um eine zu plötzliche Verzögerung mit dem Risiko der Auflösung des Lagenbildes zu vermeiden. Bei einem Überschub mittels die Artikel umgebenden Rahmens müssen weitere Förder- oder Handhabungselemente wie bspw. Hubwerke solange warten, bis der Rahmen wieder zurückgefahren ist. Dadurch kann der formschlüssige Überschub nicht zur Erhöhung der Gesamtleistung eines Palettierers o. dgl. genutzt werden.

Die DE 603 07 332 T2 offenbart eine Vorrichtung zum Transportieren und Einschachteln einer Gruppe von Gegenständen, die während der Förderung mittels einer Halteeinrichtung in einer vorbestimmten Position gehalten werden, so dass die Gegenstände als Gruppe stabil befördert werden können. Die Gegenstände sollen dadurch während ihrer Förderung und Übergabe an eine weitere Verpackungseinheit insbesondere am Umfallen gehindert werden.

Ein Verfahren zum Bilden, Halten, Trennen und Transportieren von Stapeln hinter einer Ablegevorrichtung ist weiterhin aus der DE 41 17 434 A1 bekannt. Mehrere Stapelstützen sorgen für die Stabilität der Stapel und folgen zu diesem Zweck jeweils den Bewegungsverläufen der Stapel.

Die DE 44 35 981 A1 zeigt eine Einrichtung zum Zuführen von zu verpackenden Gegenständen zu einer Verpackungsmaschine. Die Gegenstände werden entlang einer Transportstrecke befördert und mittels Schiebereinrichtungen in die Verpackungsmaschine überführt.

Die US 2004/154902 A1 offenbart ein Verfahren nach dem Oberbegriff des Anspruchs 1.

Das Ziel der vorliegenden Erfindung besteht darin, ein universell und für unterschiedliche Arten von zu transportierenden Artikeln einsetzbares Verfahren zum Transport und Überschub von Artikelgruppen in vorgegebener Formation zur Verfügung zu stellen, das mit hoher Überschubgeschwindigkeit ablaufen kann, ohne dass dabei die Artikelformation beeinträchtigt wird.

Das Ziel wird mittels eines Verfahrens nach Anspruch 1 erreicht. Weitere vorteilhafte Ausgestaltungen werden durch die Unteransprüche beschrieben. Zur Erreichung des genannten Ziels schlägt die vorliegende Erfindung ein Verfahren zur horizontalen Verschiebung einer Artikelgruppe oder Artikellage unter weitgehender Beibehaltung der Relativpositionen einer die Artikelgruppe oder Artikellage bildenden Mehrzahl von Artikeln relativ zueinander vor. Die Verschiebung erfolgt mittels wenigstens einer geeigneten Schub- und/oder Fördereinrichtung, die bspw. durch eine horizontal fördernde Auflageebene oder durch rückseitig an die Artikel angreifende Schubbalken oder auch durch eine Kombination solcher Schub- und/oder Förderelemente gebildet sein kann. Grundsätzlich kann als Schub- und/oder Fördereinrichtung im Sinne der vorliegenden Erfindung jede denkbare Einrichtung zum Einsatz kommen, die den gewünschten Zweck - die horizontale Überführung einer Gebinde- oder Artikellage unter Beibehaltung ihrer Lagenformation während des Überschubs oder der Überführung von einem ersten Modul auf ein nachgeordnetes weiteres Modul - erfüllen kann. Außerdem wird die Verschiebung unterstützt durch eine Stempeleinrichtung, die sich zumindest temporär und kurz vor oder während des Abschlusses eines horizontalen Verschiebevorganges auf eine Oberseite der vordersten Artikel der jeweiligen Lage anlegt.

Diese Stempeleinrichtung ist so zu platzieren, dass sie ein Umkippen oder Verrutschen der vordersten Artikel der jeweiligen Artikellage oder Artikelgruppe verhindern kann, was es sinnvoll macht, wenn sie ungefähr den in Förderrichtung frontseitig an der Artikelgruppe oder -lage befindlichen Artikeln zugeordnet ist. Eine Erstreckung der Stempeleinrichtung auf die Oberseite der gesamten Artikellage oder Artikelgruppe ist normalerweise nicht erforderlich, da es ausreicht, die vorderen Artikel in ihrer Lagenformation zu halten.

Im Zusammenhang der vorliegenden Erfindung kann die erwähnte Schub- und/oder Fördereinrichtung bspw. durch eine geeignete Schubeinrichtung gebildet sein. Hierbei ist dann vorgesehen, dass die gewünschte Verschiebung der kompletten Artikellage in unveränderter Formation mittels wenigstens einer an den, in Bezug auf eine Förder- bzw. Vorschubrichtung rückseits der Artikelgruppe oder Artikellage befindlichen Artikeln angreifenden Schubeinrichtung erfolgen kann.

Wahlweise kann die erwähnte Fördereinrichtung auch durch ein über wenigstens zwei Umlenkrollen oder -walzen geführtes umlaufendes Endlosband und/oder eine umlaufende Endlosgliederkette gebildet sein, die eine sich in Förder- bzw. Vorschubrichtung bewegende Unterlage für die Artikellage bildet und die in oben erwähnter Weise mit der heb- und senkbaren Stempeleinrichtung zusammenwirken kann. Ggf. kann die alternativ zu verstehende Fördereinrichtung auch mit einer geeigneten Schubeinrichtung zusammenwirken, bspw. mit einem rückseitig an die Artikellage angreifenden Schubbalken, der die weitgehend unveränderliche Lage der einzelnen Artikel zueinander während des Schub- und Bewegungsvorganges in Förderrichtung gewährleisten kann. Als solches endlos umlaufendes Auflageband, das die Fördereinrichtung bildet, kann eine an sich bekannte Mattenkette, Gliederkette o. dgl. zum Einsatz kommen.

Die mit der rückseitig angreifenden Schubeinrichtung oder der jeweils für die Überführung der Artikellage verwendeten sonstigen Schub- und/oder Fördereinrichtung zumindest abschnittsweise bewegungsgekoppelte Stempeleinrichtung wird zumindest in einer definierten Phase am Ende der Überschubbewegung auf der Oberseite der Artikellage angelegt.

Hierbei kann weiterhin vorgesehen sein, dass die Schubeinrichtung und die Stempeleinrichtung zumindest temporär annähernd synchrone Bewegungen ausführen.

Das Verfahren kann vorsehen, dass die zu handhabende Artikellage zwischen benachbarten Modulen überschoben wird, insbesondere zwischen einer Gruppierstation, einer insbesondere vertikal beweglichen Transferstation und/oder einer Beladestation, die jeweils unterschiedliche und/oder variable Höhenniveaus aufweisen können.

Eine weitere Variante des erfindungsgemäßen Verfahrens kann der Palettierung oder Depalettierung von Artikelgruppen oder Artikellagen dienen, die entlang eines Überschubweges mittels wenigstens einer zumindest abschnittsweise annähernd horizontal entlang des und parallel zum Überschubweg beweglichen und an einer Rückseite der Artikellage angreifenden Schubeinrichtung bzw. einer anders gestalteten Schub- und/oder Fördereinrichtung, wie sie oben bereits erläutert wurde, zwischen benachbarten Förder- und/oder Handhabungsstationen geschoben und/oder überführt werden. Hierbei wird gewährleistet, dass ein Lagenbild und/oder eine räumliche Anordnung der Artikel der Artikellage zueinander während jeder Überführung zwischen benachbarten Modulen beibehalten werden. Vorzugsweise sind die Schub- und/oder Stempeleinrichtungen jeweils einzelnen Modulen zugeordnet und/oder können wahlweise in benachbarte Module hineinreichen.

Mit Hilfe des erfindungsgemäßen Verfahrens und/oder seiner oben genannten Ausführungsvarianten kann zuverlässig gewährleistet werden, dass Artikellagen ohne Beeinträchtigungen ihres Lagenverbundes in hoher Geschwindigkeit innerhalb von Fördermodulen oder zwischen benachbarten Fördermodulen verschoben werden können. Während eine rückseitig an der Artikellage angreifende Schubeinrichtung für deren horizontale Förderbewegung sorgt, wird die Aufrechterhaltung des Lagenverbundes insbesondere durch einen oben auf die Artikellage auflegbaren Stempel gewährleistet, der ein Verrutschen oder Umkippen einzelner Artikel der Lage verhindert, indem er zumindest die vordersten Artikel der Lage stabilisiert.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt zwei schematische Ansichten einer beginnenden Überschubbewegung einer Artikellage von einem Modul auf ein benachbartes zweites Modul.
Fig. 2 zeigt in zwei Ansichten die erfolgte Überschubbewegung gemäß Fig. 1.
Fig. 3 zeigt zwei schematische Ansichten einer Überschubbewegung einer Artikellage von einem Modul auf ein benachbartes zweites Modul.
Fig. 4 zeigt die erfolgte Überschubbewegung gemäß Fig. 3.
Fig. 5 zeigt zwei schematische Ansichten einer beginnenden Überschubbewegung einer Artikellage von einem Modul auf ein benachbartes zweites Modul.
Fig. 6 zeigt eine weitere Phase der gemäß Fig. 5 begonnenen Überschubbewegung in zwei schematischen Ansichten.
Fig. 7 zeigt eine darauffolgende Phase der gemäß Fig. 5 begonnenen Überschubbewegung in zwei schematischen Ansichten.
Fig. 8 zeigt eine darauffolgende Phase der gemäß Fig. 5 begonnenen Überschubbewegung in zwei schematischen Ansichten, wobei ein die Artikellage aufnehmendes Modul abgesenkt wird.
Fig. 9 zeigt eine sich an die in Fig. 8 gezeigte Phase anschließende weitere Phase der Handhabung der Artikellage in zwei schematischen Ansichten.
Fig. 10 zeigt in insgesamt sieben schematischen Seitenansichten die Förderung einer Artikellage innerhalb einer Transferstation.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verfahren ausgestaltet sein kann und stellen keine abschließende Begrenzung dar Die Erfindung wird durch den Gegenstand des unabhängigen Anspruchs 1 definiert. Bevorzugte Ausführungsformen der Erfindung ergeben sich aus den Unteransprüchen.

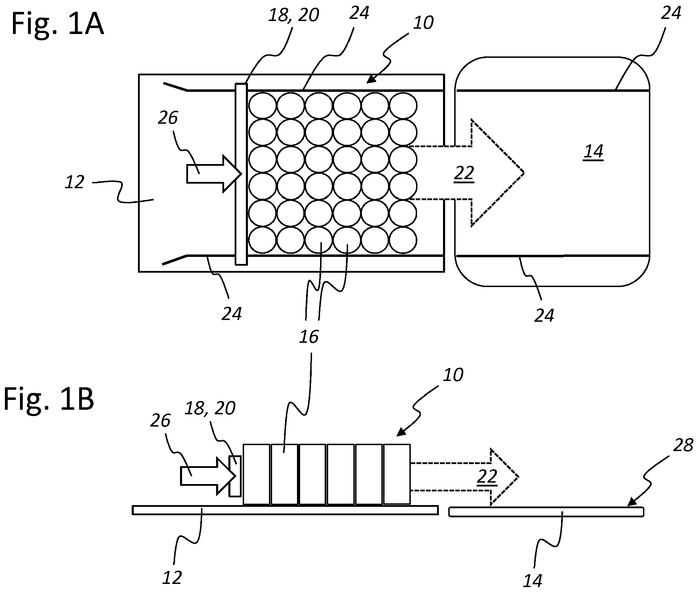

Die Fig. 1 zeigt in einer schematischen Draufsicht (Fig. 1A) und in einer schematischen Seitenansicht (Fig. 1B) eine horizontale Verschiebung einer Artikelgruppe oder Artikellage 10 aus einer ersten Lage von einem ersten Modul 12, bspw. von einem Gruppiertisch, der Teil eines Gruppiersystems sein kann, in eine zweite Lage eines zweiten Moduls 14, das bspw. ein Hubmodul einer Transferstation o. dgl. sein kann. Die gezeigte Artikellage 10 umfasst im gezeigten Ausführungsbeispiel, welches kein Teil der Erfindung darstellt, eine regelmäßige Anordnung einer Mehrzahl von Artikeln 16, die im Rechteckverbund stehen und ohne Änderung des Lagenbildes mittels einer geeigneten Schubeinrichtung 18 wie bspw. des in der Fig. 1 gezeigten Schubbalkens 20 vom ersten Modul 12 auf das zweite Modul 14 geschoben werden sollen. Die Artikel 16 können bspw. Kartons, Gebinde mit mehreren einzelnen Artikeln oder Behältern oder auch einzelne Behälter sein, die in regelmäßiger Anordnung nebeneinander stehen. Normalerweise weisen die Artikel 16 eine Höhe auf, die größer ist als eine Seitenkante ihrer Grundfläche, so dass sie bei starken Beschleunigungen oder Verzögerungen zum Kippen neigen können. Selbst wenn dies nicht zutrifft, d.h. bei Artikeln 16 mit relativ geringer Höhe, könnte bei hohen Beschleunigungen, hohen Überschubgeschwindigkeiten und starken Verzögerungen beim Überschieben der Lage von einem Modul in das nachfolgende Modul, bedingt durch die Übergänge, ein Auseinanderdriften bzw. Verrutschen der Gebinde bzw. Artikel 16 auftreten.

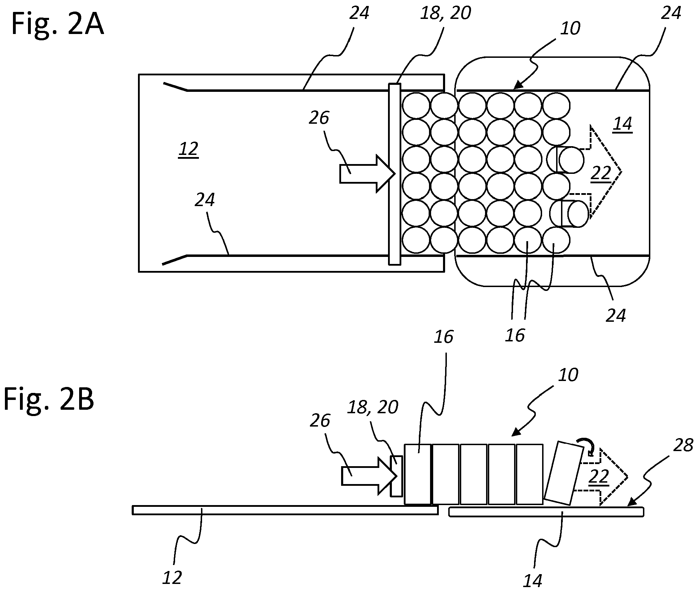

Der für die Verschiebung der Artikelgruppe oder Artikellage 10 verantwortliche Schubbalken 20, der als Schubeinrichtung 18 dient, greift an den in Bezug auf die Förder- bzw. Vorschubbewegung 22 rückseits der Artikelgruppe 10 befindlichen Artikeln 16 an und verschiebt dadurch die gesamte Artikelgruppe oder Artikellage 10, die ggf. zur Aufrechterhaltung des Lagenbildes seitlich geführt sein kann. Die optionalen seitlichen Führungen sind in der Fig. 1A und in der Fig. 2A mit der Bezugsziffer 24 bezeichnet. Durch die rückseitige Einwirkung des Schubbalkens 20 und die beidseitig des Überschubweges angeordneten seitlichen Führungen 24 können Relativpositionen der die Artikelgruppe 10 bildenden Mehrzahl von Artikeln 16 relativ zueinander weitgehend beibehalten werden; d.h. das Lagenbild der verschobenen Artikelgruppe 10 bleibt entlang der Vorschubbewegung 22 weitgehend aufrechterhalten.

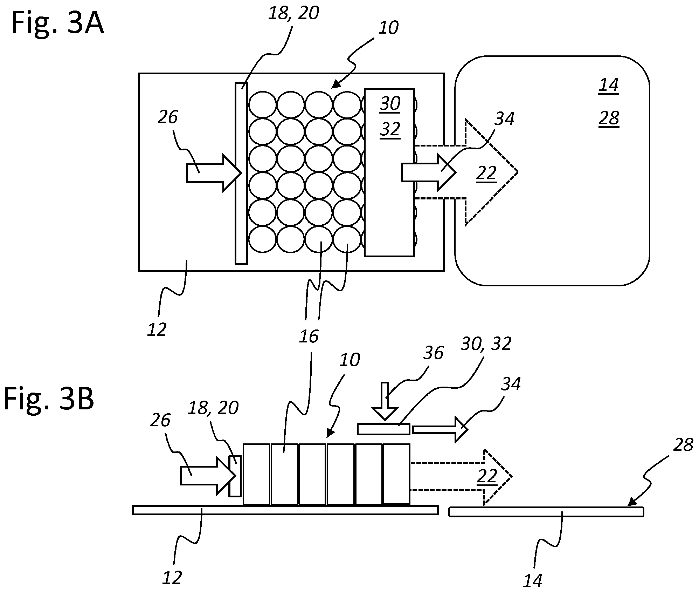

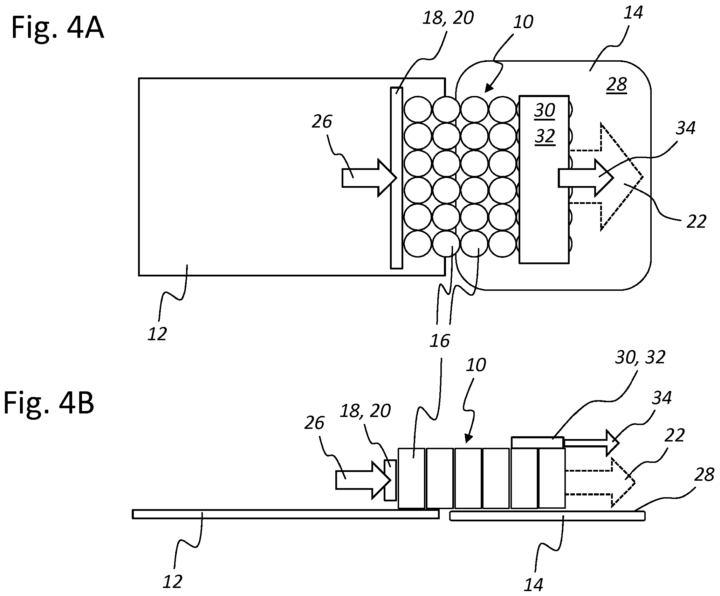

In den Figuren 3 und 4 ist auf die Darstellung der seitlichen Führungen 24 aus Gründen der besseren Übersichtlichkeit verzichtet, was jedoch nicht bedeutet, dass die Führungen dort nicht vorhanden wären.

Wie die beiden schematischen Darstellungen der Fig. 2 mit der Draufsicht der Fig. 2A und der Seitenansicht der Fig. 2B verdeutlichen, erfolgt die Vorschubbewegung 22 normalerweise nicht mit konstanter Geschwindigkeit, da die Schiebebewegung 26 des die Schubeinrichtung 18 bildenden Schubbalkens 20 zumindest kurz vor dem Erreichen der Zielposition der Artikellage 10 auf dem zweiten Modul 14 allmählich langsamer wird, damit sie nicht plötzlich zum Stillstand kommt. Dennoch besteht die Gefahr, dass einzelne der zuvorderst in der verschobenen Artikellage 10 stehenden Artikel 16 verrutschen oder umkippen können, wenn die Artikellage 10 stärker verzögert wird oder plötzlich zum Stillstand kommt, insbesondere bei Erreichen der Zielposition der Artikellage 10. Da der Schubbalken 20 die Artikellage 10 typischerweise gegenüber einer Auflageebene 28 des ersten und/oder zweiten Moduls 12, 14 verschiebt, auf der die verschobenen Artikel 16 gleiten, besteht zwischen den Bodenflächen der Artikel 16 und der Auflageebene 28 eine permanente Gleitreibung, die für einen Reibungswiderstand zwischen den gleitenden Oberflächen sorgt. Aus diesem Grund kann eine starke Verzögerung der Artikellage 10 zu einem Umkippen einzelner Artikel 16 oder zu deren Verschieben gegenüber den benachbarten Artikeln 16 führen, was durch die vorliegende Erfindung verhindert werden soll.

So verdeutlichen die Figuren 3 und 4 in schematischen Draufsichten (Fig. 3A und Fig. 4A) sowie in schematischen Seitenansichten (Fig. 3B und Fig. 4B), dass eine zumindest temporär den in Förderrichtung frontseitig befindlichen Artikeln 16 zugeordnete Stempeleinrichtung 30 einer Oberseite der Artikellage 10 folgt bzw. dort aufgelegt wird. Diese Stempeleinrichtung 30 kann insbesondere durch eine vertikal bewegliche und zumindest temporär synchron mit der Schubeinrichtung 18 in horizontaler Vorschubrichtung bewegliche Auflageplatte 32 o. dgl. gebildet sein, die zumindest kurz vor oder bei Erreichen der Ruhelage auf dem zweiten Modul 14 auf den Oberseiten der vordersten Artikeln 16 der Artikellage 10 aufgelegt wird.

Vorzugsweise kann die Auflageplatte 32 im Bereich des zweiten Moduls 14 parallel zur Vorschubbewegung 22 in einer Weise horizontal zwischen zwei Endpositionen bewegt werden, dass die Schiebebewegung 34 der Auflageplatte 32 zumindest temporär parallel und gleichsinnig zur Vorschubbewegung 22 der Artikellage 10 und der Schiebebewegung 26 des Schubbalkens 20 erfolgt.

Um zu verhindern, dass die zuvorderst stehenden Artikel 16 der verschobenen Artikellage 10 gegenüber den übrigen Artikeln 16 oder dem vorgesehenen Lagenbild verschoben werden oder umkippen, muss die Stempeleinrichtung 30 bzw. die Auflageplatte 32 rechtzeitig in vertikaler Richtung 36 auf die Oberseite zumindest der vordersten Artikel 16 der Artikellage 10 abgesenkt werden, wie dies anhand der Fig. 3B verdeutlicht ist. Zudem ist sicherzustellen, dass die horizontale Schiebebewegung 34 der Auflageplatte 32 zumindest in Phasen starker Verzögerung der Artikellage 10 und/oder in der Endphase der Überschubbewegung annähernd synchron zur Schiebebewegung 26 des Schubbalkens 20 erfolgt, insbesondere in einer Brems- oder Verzögerungsphase der Artikellage 10, wenn diese verzögert wird und zum Stillstand kommt.

In einem Ausführungsbeispiel, das kein Teil der Erfindung darstellt, kann die Auflageplatte 32 je nach Bewegungsverlauf der Vorschubbewegung 22 der Artikellage 10 auch vorzeitig entgegen der Pfeilrichtung 36 von der Artikellage 10 abgehoben und entfernt werden, wobei die gleichzeitig stattfindende Vorschubbewegung 34 bis zum Stillstand der Artikellage 10 auf dem zweiten Modul 14 nicht mehr exakt synchron mit der Vorschubbewegung 26 der Schiebereinrichtung 18 verlaufen muss. Bei einer solchen Bewegungssteuerung stabilisiert die Auflageplatte 32 die Artikelgruppe 10 zwar zunächst während ihres Verzögerungsvorganges, kann sich jedoch unmittelbar vor Erreichen des Stillstandes wieder von der Artikelgruppe oder -lage 10 entfernen. Diese Bewegungssteuerung der Stempeleinrichtung 30 kann bspw. damit zusammenhängen, dass die Verzögerung der Artikellage 10 nicht gleichmäßig erfolgt, sondern kurz vor Erreichen der Ruhelage allmählich sanfter wird, um einen plötzlichen, ruckartigen Stopp der Artikellage 10 zu vermeiden. Bei einem derartigen sanften Anhaltevorgang, dem eine Verzögerungsphase mit stärkerer Verzögerung von einer höheren Fördergeschwindigkeit vorausgegangen sein kann, ist eine Kontaktierung der Artikellage 10 mit der Stempeleinrichtung 30 unmittelbar vor dem Stillstand nicht mehr zwingend erforderlich, so dass diese bereits kurz vor Erreichen des Stillstandes der Artikellage 10 auf dem zweiten Modul 14 zumindest geringfügig in vertikaler Richtung abgehoben und von der Artikellage 10 entfernt werden kann.

Wie die Figuren 3 und 4 in schematischer Weise verdeutlichen, ermöglicht das Verfahren durch die dargestellte annähernd formschlüssige Übergabe einer Lage 10 von Artikeln 16 von einer Station (Modul 12) zu einer benachbarten Station (Modul 14) sehr schnelle Über- und Vorschubbewegungen 22 und anschließende relativ starke Verzögerungen, da die sich mit den Vorschubbewegungen 22 der Artikellage 10 mitbewegende Stempeleinrichtung 30 die Lage 10 sichert und stabilisiert. Auch hier sind seitliche Führungen 24 für die Artikellage 10 sinnvoll, wie sie in den Figuren 1 und 2 eingezeichnet sind. Erfindungsgemäß ist vorgesehen, dass die Stempeleinrichtung 30 oder Auflageplatte 32 lediglich zum Ende der Überschubbewegung, insbesondere während der Verzögerung der Artikellage 10 bis zum Stillstand, in Kontakt mit den zuvorderst beförderten Artikeln 16 gebracht wird (vgl. Fig. 4A und Fig. 4B), da im Wesentlichen nur in dieser Phase die vorderste Reihe der Artikel 16 zum Umkippen in Förderrichtung neigt, was die Stempeleinrichtung 30 nach Absenken in Pfeilrichtung 34 effektiv verhindern kann.

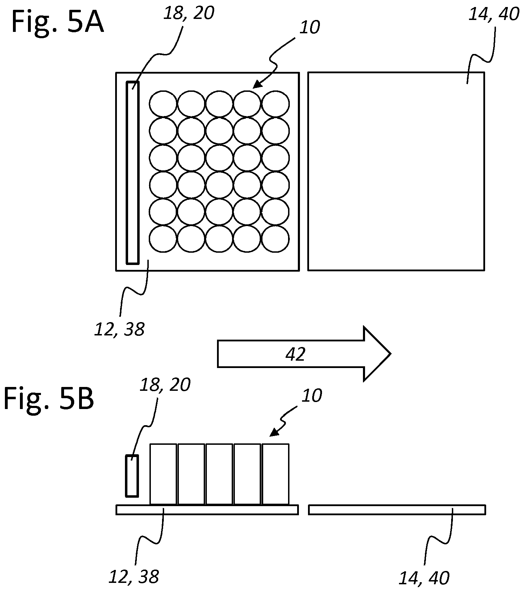

Wie die Figuren 5 bis 9 anhand eines weiteren Ausführungsbeispiels verdeutlichen, kann der Überschub auch mehrphasig erfolgen, nämlich von einem ersten Modul 12 auf ein zweites Modul 14 und von dort auf ein hier nicht dargestelltes drittes Modul, das dem zweiten Modul 14 in Vorschubrichtung 22 nachgeordnet ist. Bei diesen mehrphasigen Überschubbewegungen werden jeweils dieselben Überschubprinzipien mit den von hinten schiebenden Schubbalken 20 und den von oben stabilisierenden Stempeleinrichtungen 30 genutzt. Bei der gezeigten Variante kann bspw. das erste Modul 12 durch einen Gruppiertisch 38 oder ein sog. Lagenbildungsband o. dgl. gebildet sein, von dem aus eine Überführung von Artikellagen 10 auf eine das zweite Modul 14 bildende Transferstation 40 wie bspw. eine Hub- und/oder Umsetzeinrichtung vorgesehen sein kann, die z.B. durch einen Aufzug, eine Hubeinrichtung oder auch einen schwenkbaren und/oder heb- und senkbaren Arm einer hier nicht näher dargestellten Beladeeinrichtung o. dgl. gebildet sein kann. Das sich daran anschließende dritte Modul (nicht dargestellt) kann bspw. eine Beladestation, eine Jalousiebeladestation o. dgl. oder wahlweise auch ein Stapelplatz oder ein Palettenbeladeplatz o. dgl. zum übereinander erfolgenden Ablegen der vollständigen Artikellagen 10 sein, wobei das zweite Modul 14 bzw. die Transferstation 40 für die richtige Höhenjustierung der Artikellage 10 je nach erreichter Stapelhöhe auf dem dritten Modul bzw. dem Stapelplatz sorgen kann, so dass ein horizontaler Überschub der gesamten Artikellage 10 vom zweiten Modul 14 bzw. der Transferstation 40 auf das nachgeordnete dritte Modul bzw. den Stapelplatz ermöglicht ist. Wahlweise können alle erwähnten Module jeweils über einen Bahnantrieb in Form eines geeigneten Horizontalfördersystems verfügen. Diese Bahnantriebe sind jeweils separat steuerbar, wobei die Antriebsgeschwindigkeit auf die Vorschubgeschwindigkeit der Schubbalken 20 und Auflageplatte 32 abzustimmen ist. Normalerweise ist die Fördergeschwindigkeit des Bandes kleiner oder gleich der Überschubgeschwindigkeit. In den meisten Fällen ist die Bandgeschwindigkeit jedoch geringer als die Überschubgeschwindigkeiten, da solche Bänder in aller Regel nicht für hohe Geschwindigkeiten ausgelegt sind, wie sie bei den Überschubvorgängen wünschenswert sind.

Werden Module 12 und/oder 14 ohne eigene Bahnantriebe eingesetzt, so ist es sinnvoll, die Auflageebenen, auf denen die Artikellagen 10 verschoben werden, möglichst reibungsarm zu gestalten. So können für diese Auflageebenen bspw. Holzplatten oder Kunststoffplatten eingesetzt werden, die ggf. Längsprofilierungen in Form von Stegen, Rippen oder Nuten aufweisen können.

Es sei an dieser Stelle erwähnt, dass es für den grundsätzlichen Erfolg der vorliegenden Erfindung und für das erfindungsgemäße Zusammenwirken der Schub- und Stempeleinrichtungen nicht entscheidend ist, ob das dritte Modul durch eine bewegliche Station wie bspw. eine Jalousiebeladestation oder dgl. oder durch einen nicht beweglichen Stapelplatz gebildet ist. Die Begrifflichkeiten der ersten, zweiten und dritten Module sind daher vorrangig als Platzhalter für verschiedene Handhabungsstationen zu verstehen, zwischen denen die geschlossenen Artikellagen 10 mittels der gezeigten Überführungsbewegungen verschoben werden, ohne dass dabei einzelne Artikel verrutschen, umkippen oder auf andere Weise die Artikelformation verlassen.

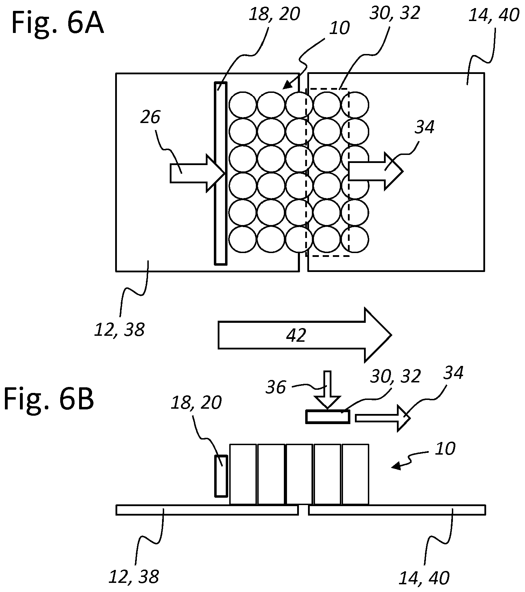

Bei den nachfolgend beschriebenen Figuren 5 bis 9 zeigen jeweils die oberen Ansichten (Fig. 5A, Fig. 6A usw.) schematische Draufsichten der zwischen den Modulen überführten Artikellage 10, während die unteren Ansichten (Fig. 5B, Fig. 6B usw.) jeweils schematische Seitenansichten derselben Prozessphasen zeigen.

Die Fig. 5 zeigt in zwei Ansichten den Beginn einer Überschubbewegung der Artikellage 10 vom ersten Modul 12 bzw. von der Gruppierstation 38 auf das zweite Modul 14 bzw. die Transferstation 40. Der dem Gruppiertisch 38 zugeordnete Schubbalken 20 befindet sich links hinter der Artikellage 10, so dass diese nach rechts in Vorschubrichtung 42 auf die Beladestation 40 geschoben werden kann. Die von oben auf die Artikellage 10 einwirkende Stempeleinrichtung 30 ist in den beiden Ansichten der Fig. 5A und der Fig. 5B noch nicht gezeichnet, da sie noch nicht benötigt wird. Sie kann sich bei dieser Phase der Überschubbewegung noch in Bereitschaft oberhalb der Artikellage 10 und beabstandet von dieser befinden. Die Stempeleinrichtung 30 bzw. die Auflageplatte 32 kann sich hierbei in überlagerten Vorschubbewegungen 34 und vertikaler Absenkbewegung 36 den vorderen Artikeln der Artikellage 10 nähern, wie dies in Fig. 6B angedeutet ist. Eine berührende Auflage auf der Artikellage 10 ist in dieser Phase der Überschubbewegung normalerweise noch nicht notwendig. Der dem Gruppiertisch 32 zugeordnete Schubbalken 20 schiebt die Artikellage 10 auf die in selber Höhe stehende Beladestation 40. Synchrone Vorschubbewegungen der Einrichtungen 18 und 30 sind in dieser Phase normalerweise noch nicht gegeben.

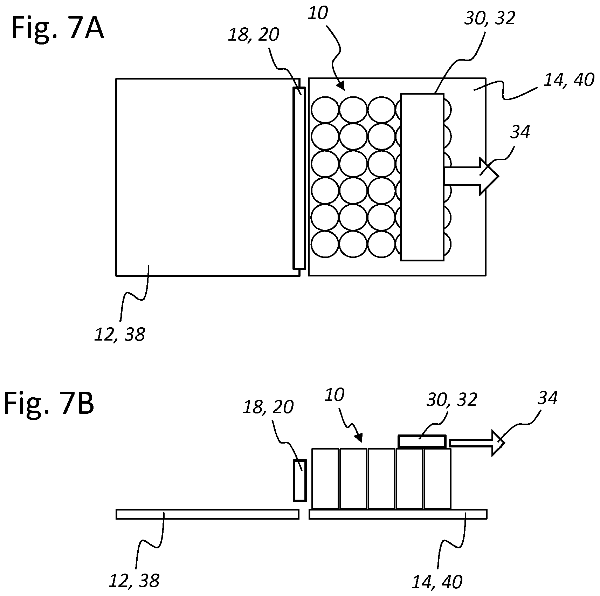

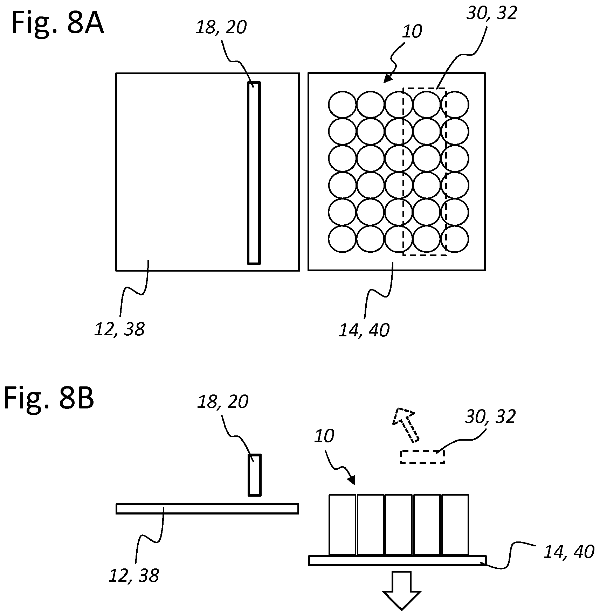

Gemäß den beiden Ansichten der Fig. 7 wurde die Artikellage 10 vollständig auf die Transferstation 40 geschoben, wobei die Stempeleinrichtung 30 bzw. die Auflageplatte 32 eine von oben wirkende und die Artikel ggf. leicht gegen die Oberfläche des zweiten Moduls 14 drückende Stabilisierung für die Lage 10 bildet und diese bei der notwendigen Verzögerung der Überführungsbewegung gegen umfallende Gebinde oder Artikel 16 sichert. Der Schubbalken 20 des ersten Moduls 12 bzw. des Gruppiertischs 38 hat seine Endposition erreicht und wird angehalten, während die Auflageplatte 32 in Pfeilrichtung 34 bis zu ihrer Endposition im vorderen Bereich der Auflagefläche der Transferstation 40 verschoben wird (vgl. Fig. 8). Das Hubwerk der Transferstation 40 kann nun gemäß Fig. 8 abgesenkt oder angehoben werden, um an das Niveau des hier nicht gezeigten dritten Moduls bzw. des Stapelplatzes angepasst zu werden. Der Schubbalken 20 fährt gegen die Förderrichtung 42 der Artikellage 10 in seine Anfangsposition zurück, während die Auflageplatte 32 wieder nach oben abgehoben werden kann, da sie ihre Funktion als Stabilisierung der abgebremsten Artikel 16 erfüllt hat. Diese in dieser Phase der Überschubbewegung funktionslos gewordene Stempeleinrichtung 30 ist durch eine unterbrochene Linierung und durch den schräg nach oben gerichteten unterbrochenen Pfeil (Fig. 8B) angedeutet.

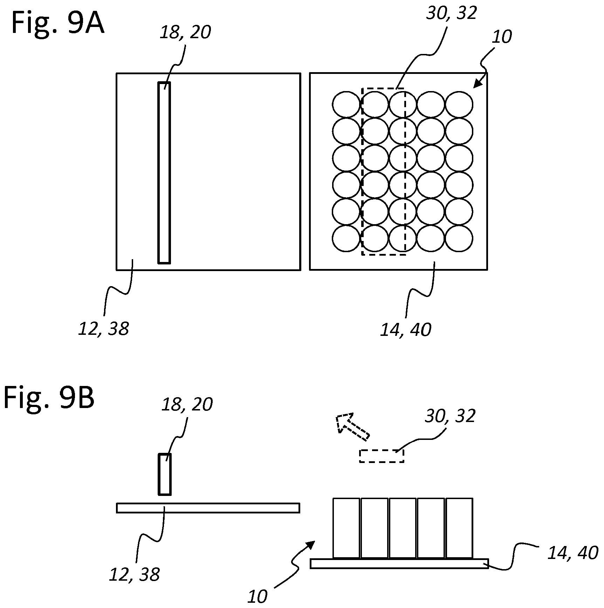

Wie die beiden schematischen Ansichten der Fig. 9 verdeutlichen, wird die Rückführbewegung des Schubbalkens 20 fortgesetzt, während auch die Auflageplatte 32 der Stempeleinrichtung 30 zu ihrer Ausgangslage entgegen der Vorschubrichtung 42 zurückbefördert wird. Da sich die Artikellage 10 noch auf der zwischenzeitlich abgesenkten Transferstation 40 befindet, stehen der Auflageplatte 32 für ihre Rückführbewegung keine Hindernisse entgegen, so dass sie in der gezeigten Weise angehoben und gegen die Vorschubrichtung der Artikellage 10 zurückgeführt werden kann. Anschließend kann die Artikellage 10 vom zweiten Modul 14 auf ein drittes Modul bzw. den Stapelplatz überschoben werden.

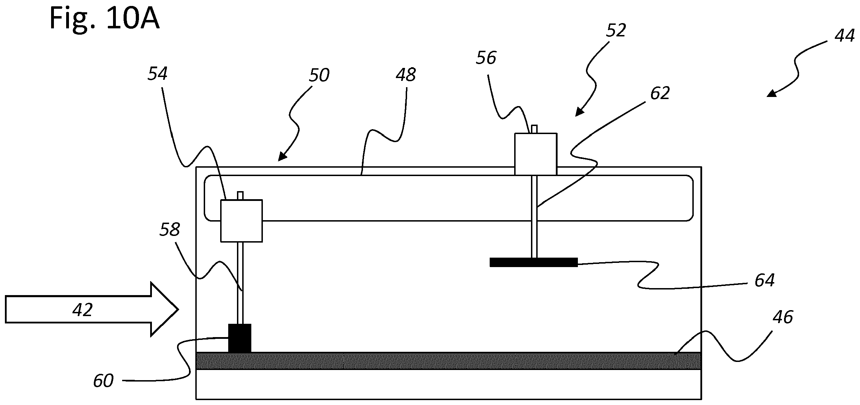

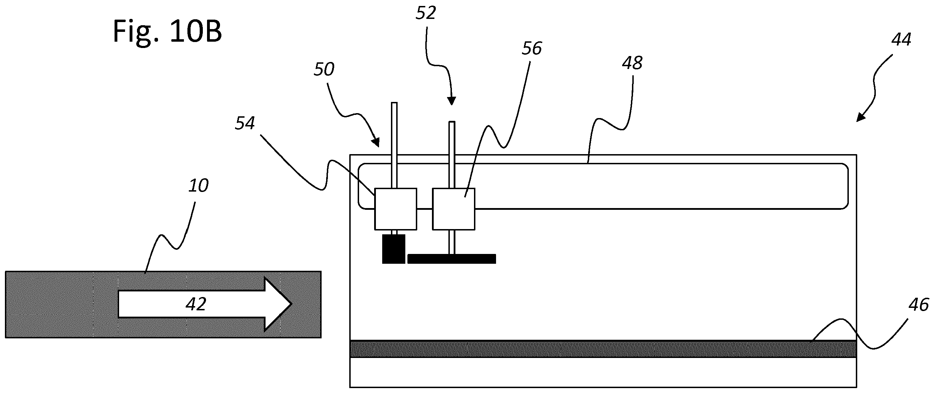

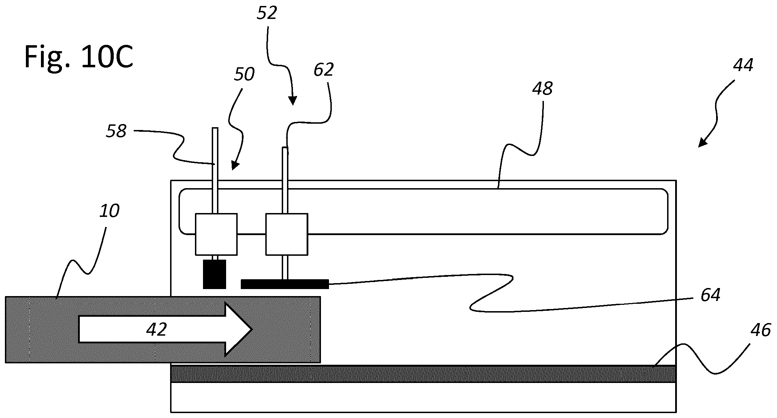

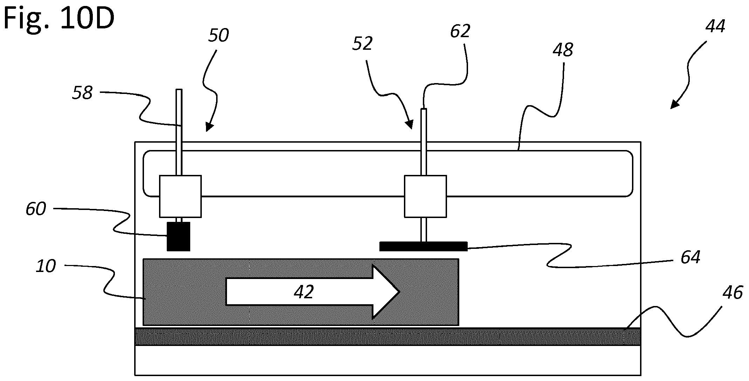

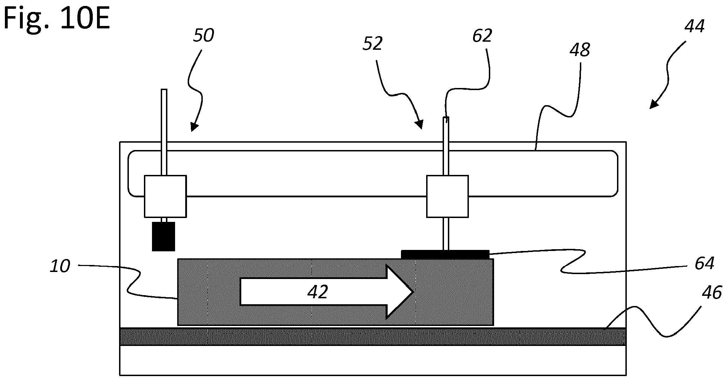

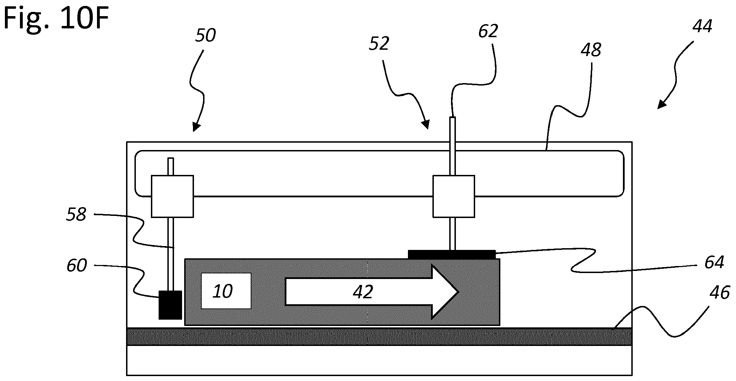

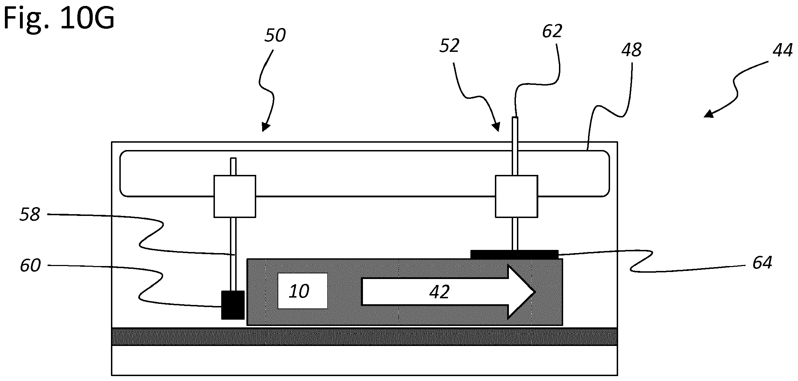

Die insgesamt sieben schematischen Seitenansichten der Fig. 10 (Figuren 10A bis 10G) zeigen anhand einer Ausführungsvariante die Bewegungsabläufe bei der Förderung einer Artikellage 10 in Förderrichtung 42 und bei deren Übernahme in ein Fördermodul, das wie zuvor anhand der ersten und/oder zweiten Fördermodule 12, 14 gezeigt, bspw. ein Gruppiermodul oder eine Beladestation o. dgl., insbesondere jedoch eine Transferstation 44 sein kann. Ein der beispielhaft gezeigten Transferstation 44 vorgeordnetes Fördermodul ist nicht dargestellt, ebenso wie ein nachgeordnetes weiteres Förder- und/oder Handhabungsmodul. Innerhalb der Transferstation ist eine horizontale Auflage- und/oder Förderebene 46 zur horizontalen Förderung der Artikellage 10, die insbesondere aus einer Mehrzahl von eng aneinander stehenden einzelnen Artikeln gebildet sein kann, die ohne weitere Befestigungsmittel als Gesamtheit durch die Transferstation 44 geschoben und transportiert werden sollen, ohne dass ihr räumlicher Lagenverbund aufgelöst oder beeinträchtigt wird.

Oberhalb der Auflage- und/oder Förderebene 46 befinden sich Führungseinrichtungen 48 für ein bewegliches Schieberelement 50 sowie ein bewegliches Stempelelement 52, die der Handhabung und Förderung der Artikellage 10 durch die Transferstation 44 dienen. Die Führungseinrichtungen 48 können insbesondere durch ein Endloszugmittel oder mehrere Endloszugmittel, durch Linearantriebseinrichtungen o. dgl. gebildet sein, die zur horizontalen Bewegung von geführten Schlittenelementen 54 und 56 dienen können, die jeweils Teil des Schieberelements 50 bzw. des Stempelelements 52 sind. Am ersten Schlittenelement 54 des Schieberelements 50 befindet sich ein vertikal beweglicher Halter 58, an dessen unterem Ende ein Schubbalken 60 angeordnet ist, der wahlweise bis auf die Auflage- und/oder Förderebene 46 abgesenkt werden kann, wie dies in Fig. 10A verdeutlicht ist. Durch die vertikale Beweglichkeit des am Schlittenelement 54 geführten Halters 58 mitsamt dem daran befestigten Schubbalken 60 kann dieser mit einer zu verschiebenden Artikellage 10 in Eingriff gebracht werden. Durch die horizontale Beweglichkeit des Schlittenelements 54 entlang der Vorschubrichtung 42 im Bereich der Transferstation 44 mit Hilfe der im oberen Bereich der Transferstation 44 angeordneten Führungseinrichtung 48 kann die Artikellage 10 in gewünschter Weise in Förderrichtung 42 auf der Auflage- und/oder Förderebene 46 durch die Transferstation 44 bewegt werden.

In gleicher Weise befindet sich am zweiten Schlittenelement 56 des Stempelelements 52 ein vertikal beweglicher Halter 62, an dessen unterem Ende ein Auflagestempel 64 angeordnet ist, der wahlweise bis auf die Oberseite einer in der Transferstation 44 befindlichen Artikellage 10 abgesenkt werden kann, wie dies in Fig. 10E verdeutlicht ist. Durch die vertikale Beweglichkeit des am Schlittenelement 56 geführten Halters 62 mitsamt dem daran befestigten Auflagestempel 64 kann dieser mit der Oberseite einer verschobenen Artikellage 10 in Eingriff gebracht werden. Durch die horizontale Beweglichkeit des Schlittenelements 55 entlang der Vorschubrichtung 42 im Bereich der Transferstation 44 mit Hilfe der im oberen Bereich der Transferstation 44 angeordneten Führungseinrichtung 48 können die einzelnen Artikel der Artikellage 10 bei einer Bewegung durch die Transferstation 44 am Umfallen hindert und im Lagenverbund gehalten werden.

Die grundsätzliche Funktionsweise des Schieberelements 50 und des Stempelelements 52 wurden anhand der schematischen Darstellung der Fig. 10A erläutert. Ihre Wirkungsweise und Bewegungsabläufe bei der Handhabung einer Artikellage 10 bei deren Förderung durch die Transferstation werden nachfolgend anhand der Figuren 10B bis 10G näher erläutert. So können sich das Schieberelement 50 und das Stempelelement 52 grundsätzlich in beliebiger Position befinden, wenn eine Artikellage 10 in die Transferstation 44 befördert wird und sich dieser annähert. Die beiden vertikal beweglichen Halter 58 und 62 mit den daran angeordneten Schubbalken 60 bzw. Auflagestempel 64 müssen sich allerdings oberhalb der Artikellage 10 befinden, wie dies in Fig. 10B gezeigt ist, da ansonsten die Förderung der Artikellage 10 auf der Auflage- und/oder Förderebene 46 gestört oder beeinträchtigt würde.

Die Position der mittels der Führungseinrichtungen 48 horizontal beweglichen Schieber- und Stempelelemente 50 und 52 kann während der weiteren Förderung der Artikellage 10 in die Transferstation 44 hinein unverändert bleiben, wie dies anhand der Fig. 10C angedeutet ist. Erst bei weiterer Förderung ist es erforderlich, das Stempelelement 52 parallel zur Förderrichtung 42 der Artikellage 10 folgen zu lassen, um den Auflagestempel 64 im vorderen Bereich der Artikellage 10 auf deren Oberseite platzieren zu können. Diese Horizontalbewegung des Schlittenelements 56 des Stempelelements 52 ist anhand der Fig. 10D verdeutlicht. Wie es die Fig. 10E erkennen lässt, dauert die Horizontalbewegung des Schlittenelements 56 parallel zur Förderrichtung 42 solange, wie sich auch die Artikellage 10 in Förderrichtung 42 bewegt, so dass sich das Stempelelement 52 weiterhin im vorderen Bereich der Artikellage 10 befindet.

Erst während einer Verzögerung der Artikellage 10 oder kurz vor deren Stillstand wird der Auflagestempel 64 auf die Oberseite der Artikellage 10 abgesenkt, wie dies in Fig. 10E gezeigt ist. Die horizontale Bewegung des Schlittenelements 56 mit Hilfe der Führungseinrichtung 48 kann hierbei noch andauern, während gleichzeitig der vertikal im Schlittenelement 56 bewegliche Halter 62 mit dem daran angeordneten Auflagestempel 64 bis auf die Oberseite der Artikellage 10 abgesenkt wird und dort zur Anlage kommt, was ein Umfallen oder Verrutschen einzelner Artikel, die sich durch die Verzögerung der Artikellage 10 aus deren Lagenverbund lösen könnten, verhindert.

Zur Fortsetzung der weiteren Förderbewegung der Artikellage 10 innerhalb der Transferstation 44 kann der vertikal bewegliche Halter 58 des Schlittenelements 54 des hinteren Schieberelements 50 mit dem daran angeordneten Schubbalken 60 hinter der Artikellage 10 abgesenkt werden, wie dies in Fig. 10F verdeutlicht ist. Gemäß Fig. 10G kann dann der Schubbalken 60 ggf. für den weiteren Transport der Artikellage 10 in der Transferstation 44 sorgen, wie dies in Fig. 10G erkennbar ist. Die Schlittenelemente 54 und 56 der Schieber- und Stempelelemente 50 bzw. 52 bewegen sich hierbei sinnvollerweise synchron zueinander in Förderrichtung 42, was mittels der in geeigneter Weise gesteuerten Führungseinrichtung 48 erfolgen kann, die für den horizontalen Transport der Schlittenelemente 54 und 56 sorgen kann.

Wahlweise kann bei der weiteren Förderung der Artikellage 10 in Förderrichtung 42 aus der Transferstation 44 heraus (nicht dargestellt) das Stempelelement 52 wieder abgehoben und an seine Ausgangsposition (Fig. 10B) zurückgefahren werden.

Wahlweise kann die erwähnte Fördereinrichtung auch durch ein über wenigstens zwei Umlenkrollen oder -walzen geführtes umlaufendes Endlosband und/oder eine umlaufende Endlosgliederkette gebildet sein, die eine sich in Förder- bzw. Vorschubrichtung bewegende Unterlage für die Artikellage bildet und die in oben erwähnter Weise mit der heb- und senkbaren Stempeleinrichtung zusammenwirken kann. Ggf. kann die alternativ zu verstehende Fördereinrichtung auch mit einer geeigneten Schubeinrichtung zusammenwirken, bspw. mit einem rückseitig an die Artikellage angreifenden Schubbalken, der die weitgehend unveränderliche Lage der einzelnen Artikel zueinander während des Schub- und Bewegungsvorganges in Förderrichtung gewährleisten kann. Als solches endlos umlaufendes Auflageband, das die Fördereinrichtung bildet, kann eine an sich bekannte Mattenkette, Gliederkette o. dgl. zum Einsatz kommen.

Die Erfindung wurde unter Bezugnahme auf eine bevorzugte Ausführungsform beschrieben. Es ist jedoch für einen Fachmann vorstellbar, dass Abwandlungen oder Änderungen gemacht werden können, sofern sie dabei den Schutzbereich der nachstehenden Ansprüche nicht verlassen.

### Bezugszeichenliste

10 Artikellage, Artikelgruppe
12 erstes Modul
14 zweites Modul
16 Artikel, Behälter
18 Schubeinrichtung
20 Schubbalken
22 Förderbewegung, Vorschubbewegung
24 seitliche Führung
26 Schiebebewegung (der Schubeinrichtung)
28 Auflageebene
30 Stempeleinrichtung
32 Auflageplatte
34 Schiebebewegung (der Auflageplatte)
36 Absenkrichtung (der Auflageplatte), Absenkbewegung
38 Gruppiertisch
40 Transferstation, Beladestation, Transfereinheit
42 Vorschubrichtung
44 Transferstation, Transfereinheit
46 Auflageebene, Förderebene
48 Führungseinrichtung
50 Schieberelement
52 Stempelelement
54 Schlittenelement
56 Schlittenelement
58 Halter (vertikal beweglich)
60 Schubbalken
62 Halter (vertikal beweglich)
64 Auflagestempel

## Patentansprüche

1. Verfahren zur horizontalen Verschiebung einer Artikelgruppe oder Artikellage (10) unter weitgehender Beibehaltung der Relativpositionen einer die Artikelgruppe oder Artikellage (10) bildenden Mehrzahl von Artikeln (16) relativ zueinander mittels wenigstens einer Schub- und/oder Fördereinrichtung (18, 20, 50), wobei sich eine oberhalb der Artikelgruppe oder -lage (10) angeordnete bzw. befindliche Stempeleinrichtung (30, 32, 52) zumindest temporär und kurz vor oder während des Abschlusses eines horizontalen Verschiebevorganges auf eine Oberseite der vordersten Artikel (16) der Artikelgruppe oder Artikellage (10) anlegt.

2. Verfahren nach Anspruch 1, bei dem die Schub- und/oder Fördereinrichtung durch wenigstens eine an den, in Bezug auf eine Förder- bzw. Vorschubrichtung (38, 42) rückseits der Artikelgruppe oder Artikellage (10) befindlichen Artikeln (16) angreifenden Schubeinrichtung (18, 20, 50) gebildet wird.

3. Verfahren nach Anspruch 1, bei dem die Fördereinrichtung durch ein, eine sich in Förder- bzw. Vorschubrichtung (38, 42) bewegende Unterlage für die Artikellage (10) bildendes umlaufendes Endlosband und/oder eine umlaufende Endlosgliederkette gebildet wird.

4. Verfahren nach Anspruch 2, bei dem die mit der rückseitig angreifenden Schubeinrichtung (18, 20, 50) zumindest abschnittsweise bewegungsgekoppelte Stempeleinrichtung (30, 32, 52) am Ende einer Überschubbewegung auf der Oberseite der Artikellage (10) angelegt wird.

5. Verfahren nach einem der Ansprüche 2 bis 4, bei dem die Schubeinrichtung (18, 20, 50) und die Stempeleinrichtung (30, 32, 52) zumindest temporär annähernd synchrone Bewegungen ausführen.

6. Verfahren nach einem der Ansprüche 1 bis 5, bei dem die Artikellage (10) zwischen benachbarten Modulen (12, 14) überschoben wird, insbesondere zwischen einer Gruppierstation (38), einer insbesondere vertikal beweglichen Transferstation (40, 44) und/oder einer Beladestation, die jeweils unterschiedliche und/oder variable Höhenniveaus aufweisen können.

7. Verfahren nach einem der Ansprüche 2 bis 6 zur Palettierung oder Depalettierung von Artikelgruppen oder Artikellagen (10), die entlang eines Überschubweges mittels wenigstens einer zumindest abschnittsweise annähernd horizontal entlang des und parallel zum Überschubweg beweglichen und an einer Rückseite der Artikellage (10) angreifenden Schubeinrichtung (18, 20, 50) zwischen benachbarten Förder- und/oder Handhabungsstationen (12, 14, 38, 40, 44) geschoben und/oder überführt werden.

8. Verfahren nach einem der Ansprüche 1 bis 7, bei dem ein Lagenbild und/oder eine räumliche Anordnung der Artikel (16) der Artikellage (10) zueinander während jeder Überführung zwischen benachbarten Modulen (12, 14, 38, 40, 44) beibehalten werden.

9. Verfahren nach einem der Ansprüche 1 bis 8, bei dem die Schub- und/oder Stempeleinrichtungen (18, 20, 50, 30, 32, 52) jeweils einzelnen Modulen (12, 14, 38, 40, 44) zugeordnet sind und/oder in benachbarte Module (12, 14, 38, 40, 44) hineinreichen können.

## Claims

1. A method for the horizontal shifting of an article group or article layer (10) by means of at least one pushing device and/or conveying device (18, 20, 50), while largely maintaining the mutually relative positions of a plurality of articles (16) forming the article group or article layer (10), wherein a punch device (30, 32, 52), which is arranged or located above the article group or article layer (10), comes to abut on a top side of the foremost articles (16) of the article group or article layer (10) at least temporarily and shortly before or during the completion of a horizontal shifting procedure.

2. The method according to claim 1, in which the pushing device and/or conveying device is formed by at least one pushing device (18, 20, 50) engaging with the articles (16) located at the back of the article group or article layer (10) as seen in relation to a conveying direction or feed direction (38, 42).

3. The method according to claim 1, in which the conveying device is formed by a circulating endless belt and/or by a circulating endless link chain forming a support for the article layer (10), with the support moving in conveying direction or feed direction (38, 42).

4. The method according to claim 2, in which the punch device (30, 32, 52), which is at least in sections movement-coupled with the pushing device (18, 20, 50) engaging at the back, is brought to abut on the top side of the article layer (10) at the end of a transfer movement.

5. The method according to one of the claims 2 to 4, in which the pushing device (18, 20, 50) and the punch device (30, 32, 52) at least temporarily perform approximately synchronous movements.

6. The method according to one of the claims 1 to 5, in which the article layer (10) is transferred between adjacent modules (12, 14), in particular, between a grouping station (38), a transfer station (40, 44), in particular, a vertically movable transfer station (40, 44), and/or a loading station, which stations can in each instance have different and/or variable levels of height.

7. The method according to one of the claims 2 to 6 for palletizing or depalletizing article groups or article layers (10), which are being pushed and/or transferred between adjacent conveying stations and/or handling stations (12, 14, 38, 40, 44) along a transfer path by means of at least one pushing device (18, 20, 50) engaging at a back of the article layer (10), the pushing device (18, 20, 50) being at least in sections movable approximately horizontally along and parallel to the transfer path.

8. The method according to one of the claims 1 to 7, in which a layer pattern and/or a spatial arrangement of the articles (16) in the article layer (10) relative to each other is maintained during each transfer between adjacent modules (12, 14, 38, 40, 44).

9. The method according to one of the claims 1 to 8, in which the pushing devices and/or punch devices (18, 20, 50, 30, 32, 52) are each assigned to individual modules (12, 14, 38, 40, 44) and/or can each extend into adjacent modules (12, 14, 38, 40, 44).

## Revendications

1. Procédé de déplacement horizontal d'un groupe d'articles ou d'une couche d'articles (10) tout en maintenant dans une large mesure les positions relatives les uns par rapport aux autres d'une pluralité d'articles (16) formant le groupe d'articles ou la couche d'articles (10), au moyen d'au moins un dispositif de poussée et/ou de transport (18, 20, 50), dans lequel un dispositif formant piston (30, 32, 52) disposé ou bien situé au-dessus du groupe d'articles ou de la couche d'articles (10) s'applique au moins temporairement et peu avant ou pendant la fin d'une opération de déplacement horizontal sur une face supérieure des articles (16) situés en premier du groupe d'articles ou de la couche d'articles (10) cré(é)e.

2. Procédé selon la revendication 1, dans lequel le dispositif de poussée et/ou de transport est formé par au moins un dispositif de poussée (18, 20, 50) qui s'engage sur les articles (16) situés sur la face arrière du groupe d'articles ou de la couche d'articles (10), par rapport à une direction de transport ou bien d'avance (38, 42).

3. Procédé selon la revendication 1, dans lequel le dispositif de transport est formé par une bande sans fin circulante et/ou une chaîne à maillons sans fin circulante formant une base pour la couche d'articles (10), qui se déplace dans la direction de transport ou bien d'avance (38, 42).

4. Procédé selon la revendication 2, dans lequel le dispositif formant piston (30, 32, 52) qui est au moins par sections couplé en mouvement au dispositif de poussée (18, 20, 50) s'engageant à l'arrière, est appliqué sur la face supérieure de la couche d'articles (10) à la fin d'un mouvement de transfert par poussée.

5. Procédé selon l'une quelconque des revendications 2 à 4, dans lequel le dispositif de poussée (18, 20, 50) et le dispositif formant piston (30, 32, 52) exercent au moins temporairement des mouvements approximativement synchrones.

6. Procédé selon l'une quelconque des revendications 1 à 5, dans lequel la couche d'articles (10) est transférée par poussée entre des modules (12, 14) adjacents, en particulier entre un poste de groupement (38), un poste de transfert en particulier mobile verticalement (40, 44) et/ou un poste de chargement, qui peuvent présenter chacun des niveaux de hauteur différents et/ou variables.

7. Procédé selon l'une quelconque des revendications 2 à 6, destiné à palettiser ou à dépalettiser des groupes d'articles ou des couches d'articles (10) qui sont poussés et/ou transférés le long d'un chemin de transfert au moyen d'au moins un dispositif de poussée (18, 20, 50) entre des postes de transport et/ou de manipulation (12, 14, 38, 40, 44) adjacents, le dispositif de poussée étant déplaçable au moins par sections approximativement de manière horizontale le long du et parallèlement au chemin de transfert et s'engageant sur une face arrière de la couche d'articles (10).

8. Procédé selon l'une quelconque des revendications 1 à 7, dans lequel un motif de couches et/ou une disposition spatiale des articles (16) de la couche d'articles (10) les uns par rapport aux autres est maintenu(e) lors de chaque transfert entre des modules (12, 14, 38, 40, 44) adjacents.

9. Procédé selon l'une quelconque des revendications 1 à 8, dans lequel les dispositifs de poussée et/ou formant piston (18, 20, 50, 30, 32, 52) sont associés chacun à des modules (12, 14, 38, 40, 44) individuels et/ou peut s'étendre jusque dans des modules (12, 14, 38, 40, 44) adjacents.
